# EUROPEAN PATENT APPLICATION

(11) **EP 4 227 554 A1**
(43) Date of publication of application: **16.08.2023**
(21) Application number: 21893345.5
(22) Date of filing: 03.06.2021
(51) Int. Cl.: F16H 3/087, F16H 37/08, F16H 57/023

(54) **TWO-SPEED TRANSMISSION OF ELECTRIC VEHICLE, AND ELECTRIC VEHICLE**

(30) Priority: 17.11.2020 CN 202011286691
(71) Applicant: Huawei Digital Power Technologies Co., Ltd., Shenzhen, Guangdong 518043 (CN)
(72) Inventor: ZHONG, Hu, Shenzhen, Guangdong 518129 (CN); HU, Xiong, Shenzhen, Guangdong 518129 (CN); WANG, Huan, Shenzhen, Guangdong 518129 (CN)
(74) Representative: Pfenning, Meinig & Partner mbB
(86) International application number: PCT/CN2021/098113
(87) International publication number: WO 2022/105191

(57) **Abstract**

A two-speed transmission gearbox of an electric vehicle is provided, including an input shaft (1), a countershaft (4), a first clutch (7), and a second clutch (8). The input shaft is configured to be connected to a motor, and a first-gear input tooth (2) and a second-gear input tooth (3) are disposed on the input shaft. A first-gear output tooth (5) and a second-gear output tooth (6) are disposed on the countershaft, the first-gear output tooth can be in constant mesh with the first-gear input tooth, and the second-gear output tooth can be in constant mesh with the second-gear input tooth. The first clutch is disposed on the countershaft, and connects the first-gear output tooth to the countershaft. The second clutch is disposed on the countershaft, and connects the second-gear output tooth to the countershaft. Both the first clutch and the second clutch in the two-speed transmission gearbox are disposed on the countershaft. Therefore, an overall arrangement structure of the two-speed transmission gearbox is simple, and costs are low. Because a rotation speed of the countershaft is lower than a rotation speed of the input shaft, a risk of damage caused by the clutch due to a high rotation speed is reduced, response time and drag torque of the clutch are reduced, and efficiency of the electric vehicle is improved. In addition, an electric vehicle including the two-speed transmission gearbox is further provided.

## Description

This application claims priority to Chinese Patent Application No. 202011286691.8, filed with the China National Intellectual Property Administration on November 17, 2020 and entitled "TWO-SPEED TRANSMISSION GEARBOX OF ELECTRIC VEHICLE AND ELECTRIC VEHICLE", which is incorporated herein by reference in its entirety.

### TECHNICAL FIELD

This application relates to the field of electric vehicle technologies, and in particular, to a two-speed transmission gearbox of an electric vehicle and an electric vehicle.

### BACKGROUND

A transmission gearbox is an important part of a vehicle. With development of electric vehicle technologies, the transmission gearbox has become an important part that affects overall performance of an electric vehicle.

Transmission gearboxes in the conventional technology include a single-speed transmission gearbox and a two-speed transmission gearbox. The single-speed transmission gearbox can only achieve balance between costs and efficiency by finding an optimal velocity ratio within a limited vehicle speed range. Therefore, system efficiency of a vehicle is restricted. The velocity ratio needs to be reduced to achieve a higher vehicle speed. As a result, system torque density decreases, and costs of a motor increase. The two-speed transmission gearbox has a complex structural arrangement, and has high costs.

### SUMMARY

Technical solutions of this application provide a two-speed transmission gearbox of an electric vehicle and an electric vehicle, to resolve conventional-technology technical problems of a complex structure and high costs of the two-speed transmission gearbox.

According to a first aspect, a two-speed transmission gearbox of an electric vehicle is provided, including:
an input shaft configured to be connected to a motor, where a first-gear input tooth and a second-gear input tooth are disposed on the input shaft;
a countershaft, where a first-gear output tooth and a second-gear output tooth are disposed on the countershaft, the first-gear output tooth can be in constantly mesh with the first-gear input tooth, and the second-gear output tooth can be in constant mesh with the second-gear input tooth;
a first clutch, disposed on the countershaft and configured to connect the first-gear output tooth to the countershaft; and
a second clutch, disposed on the countershaft and configured to connect the second-gear output tooth to the countershaft.

In the two-speed transmission gearbox provided in this application, both the first clutch and the second clutch are disposed on the countershaft, and two-gear power output is implemented by using the first clutch and the second clutch. Therefore, an overall arrangement structure of the two-speed transmission gearbox is simple, and costs are low. In addition, because a rotation speed of the countershaft is lower than a rotation speed of the input shaft, a risk of damage caused by the clutch due to a high rotation speed is reduced, response time of the clutch is reduced, and drag torque of the clutch is further reduced. In this way, efficiency of the electric vehicle is improved.

In a possible implementation, the two-speed transmission gearbox further includes:
a third clutch, disposed on the countershaft and configured to be simultaneously engaged with the second clutch to implement parking.

Simultaneous engagement of the third clutch and the second clutch may replace a parking function. Therefore, a parking gear does not need to be disposed. This reduces arrangement space of the transmission gearbox, and a structure of the transmission gearbox is more compact.

In a possible implementation, the first clutch includes an inner ring and an outer ring that can rotate relative to the inner ring; and
the third clutch can be engaged with the first clutch to lock the outer ring.

In a first-gear driving process, when a road condition changes, the third clutch may be controlled to lock the outer ring of the first clutch, and after the inner ring and the outer ring have a same rotation speed, output of the motor is transferred to the countershaft, to prevent power interruption of the motor.

In a possible implementation, the two-speed transmission gearbox further includes an actuator and a gearshift member, and the actuator is configured to drive the gearshift member, to enable the gearshift member to toggle the third clutch to a set position, so that the first-gear output tooth is connected to the countershaft.

The third clutch is toggled by disposing the actuator and the gearshift member, so that the two-speed transmission gearbox has advantages of a simple structure and smooth gear shifting.

In a possible implementation, the gearshift member is further configured to toggle the second clutch, so that the second clutch is engaged or disengaged.

Because the gearshift member can toggle the second clutch while toggling the third clutch, only one component, that is, the gearshift member, can implement two functions without additionally disposing other actuators. This further simplifies a structure of the transmission gearbox, and arrangement of the transmission gearbox is more compact.

In a possible implementation, the gearshift member includes a first sliding surface and a second sliding surface.

The first sliding surface is used to: when the gearshift member rotates, toggle the third clutch to the set position, so that the first-gear output tooth is connected to the countershaft.

The second sliding surface is used to: when the gearshift member rotates, toggle the second clutch, so that the second clutch is engaged or disengaged.

In the foregoing solution, the gearshift member of the two-speed transmission gearbox has an advantage of a simple structure. The first sliding surface and the second sliding surface may be curved surfaces for smooth transition, so that the gearshift member can more smoothly toggle the third clutch and the second clutch.

In a possible implementation, the third clutch includes a sliding sleeve, and the gearshift member can toggle the sliding sleeve, so that the first-gear output tooth is engaged or disengaged with the countershaft.

In a possible implementation, the third clutch is a dog clutch.

In the foregoing solution, the outer ring of the first clutch may have a toothed structure, and the toothed structure is combined with an internal tooth of the dog clutch, to implement stable engagement of the third clutch and the first clutch.

In a possible implementation, the two-speed transmission gearbox further includes a countershaft gear, and the countershaft gear is disposed on the countershaft; and
the third clutch is slidably connected to an outer ring of the countershaft gear.

In a possible implementation, an outer ring of the first clutch is connected to an inner ring of the first-gear output tooth through welding or by using a spline.

In a possible implementation, the second clutch is a dry multi-plate clutch.

The foregoing solution can be used to improve arrangement space of the two-speed transmission gearbox.

In a possible implementation, the two-speed transmission gearbox includes a housing, and the housing covers an outer side of the second clutch.

If a dry clutch is in contact with water or oil, frictional characteristics of the dry clutch change. This results in a significant decrease in transmission torque and possible friction plate ablation. Moreover, debris generated after a dry friction plate wears can contaminate transmission oil in the transmission gearbox. Therefore, in the foregoing solution, the housing covers the outer side of the first clutch, to isolate the dry clutch from a main body of a gearbox.

According to a second aspect, an electric vehicle is provided, including the foregoing two-speed transmission gearbox.

The electric vehicle provided in this application has a characteristic of high system efficiency. Compared with an electric vehicle in the conventional technology, efficiency of an electric vehicle powertrain system can be improved by 2.5%, and a remaining driving range can be improved by 3 to 5%. Battery usage can be reduced with a same total driving range. Therefore, costs of the electric vehicle are reduced.

### BRIEF DESCRIPTION OF DRAWINGS

FIG. 1 is a schematic diagram of a structure of a two-speed transmission gearbox of an electric vehicle according to an embodiment of this application;
FIG. 2 is a schematic diagram of a two-speed transmission gearbox of an electric vehicle during first-gear driving according to an embodiment of this application;
FIG. 3 is a schematic diagram of a two-speed transmission gearbox of an electric vehicle during second-gear driving according to an embodiment of this application;
FIG. 4 is a detailed schematic diagram of a structure of a gearshift member;
FIG. 5 is a front view of the gearshift member in FIG. 4;
FIG. 6 is a schematic diagram of braking energy recovery of a two-speed transmission gearbox of an electric vehicle during first-gear driving according to an embodiment of this application; and
FIG. 7 is a schematic diagram of braking energy recovery of a two-speed transmission gearbox of an electric vehicle during second-gear driving according to an embodiment of this application;

### Reference numerals

1: input shaft; 2: first-gear input tooth; 3: second-gear input tooth; 4: countershaft; 5: first-gear output tooth; 6: second-gear output tooth; 7: first clutch; 8: second clutch; 81: outer-piece supporting carrier; 9: third clutch; 10: actuator; 11: gearshift member; 111: first sliding surface; 112: second sliding surface; 12: countershaft gear; 13: final reduction input tooth; 14: final reduction output tooth; 15: differential; and 16: bearing.

### DESCRIPTION OF EMBODIMENTS

Terms used in embodiments of this application are only used to explain specific embodiments of this application, but are not intended to limit this application.

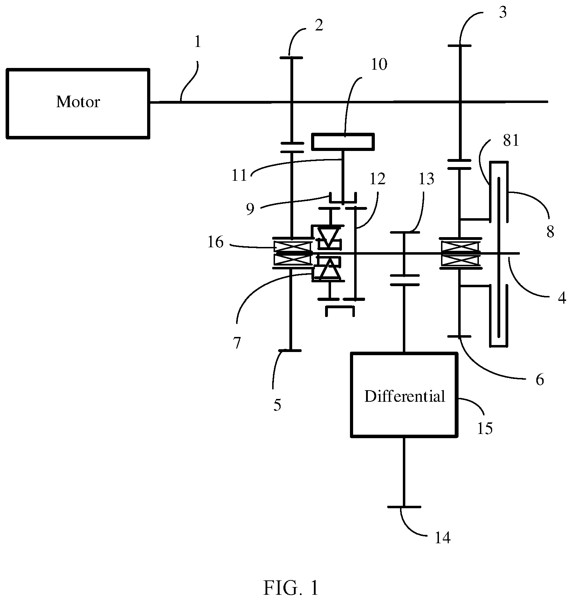

Scenarios in embodiments of this application are first described. FIG. 1 is a schematic diagram of a structure of a two-speed transmission gearbox of an electric vehicle according to an embodiment of this application. Refer to FIG. 1. This embodiment of this application relates to the two-speed transmission gearbox of the electric vehicle, and the two-speed transmission gearbox includes an input shaft 1 and a countershaft 4. The input shaft 1 is configured to be connected to a motor, and a first-gear input tooth 2 and a second-gear input tooth 3 are disposed on the input shaft 1. A first-gear output tooth 5 and a second-gear output tooth 6 are disposed on the countershaft 4, the first-gear output tooth 5 can be in constant mesh with the first-gear input tooth 2, and the second-gear output tooth 6 can be in constant mesh with the second-gear input tooth 3.

In a specific implementation, the first-gear input tooth 2 and the second-gear input tooth 3 may be directly connected on the input shaft 1.

In a specific implementation, the first-gear output tooth 5 and the second-gear output tooth 6 may be sleeved on the countershaft 4 through a bearing 16.

That is, first-gear transmission includes the first-gear input tooth 2 and the first-gear output tooth 5, and the first-gear output tooth 5 is in mesh with the first-gear input tooth 2 to implement first-gear low-speed output of the electric vehicle. Second-gear transmission includes the second-gear input tooth 3 and the second-gear output tooth 6, and the second-gear output tooth 6 is in mesh with the second-gear input tooth 3 to implement second-gear high-speed output of the electric vehicle.

In a possible implementation, final reduction transmission includes a final reduction input tooth 13 and a final reduction output tooth 14, and the final reduction output tooth 14 is in mesh with the final reduction input tooth 13 to transmit torque to a differential 15 through the countershaft 4.

In the conventional technology, a clutch used to engage and disengage the second-gear input tooth 3 and the second-gear output tooth 6 is disposed on the input shaft 1; and because a rotation speed of the input shaft 1 is high, an operation rotation speed of the clutch is high, and a blasting rotation speed of the clutch correspondingly increases. Consequently, the clutch is damaged if the clutch is not strong enough. In addition, the high rotation speed of the clutch causes an increase in moment of inertia, and response time of the clutch increases.

The two-speed transmission gearbox provided in this embodiment of this application further includes a first clutch 7 and a second clutch 8. The first clutch 7 may be a one-way clutch, is disposed on the countershaft 4, and is configured to connect the first-gear output tooth 5 to the countershaft 4.

The second clutch 8 is disposed on the countershaft 4, and is configured to connect the second-gear output tooth 6 to the countershaft 4. The second clutch 8 may be connected to the second-gear output tooth 6 through an outer-piece supporting carrier 81.

That is, the first clutch 7 can implement first-gear power transmission, and the second clutch 8 can implement second-gear power transmission.

In the two-speed transmission gearbox provided in this embodiment of this application, both the first clutch 7 and the second clutch 8 are disposed on the countershaft 4. Because a rotation speed of the countershaft 4 is lower than the rotation speed of the input shaft 1, the risk of damage caused by the clutch due to the high rotation speed is reduced, the response time of the clutch is reduced, and drag torque of the clutch is further reduced. Therefore, efficiency of the electric vehicle is improved.

In a possible implementation, the foregoing two-speed transmission gearbox may further include a third clutch 9, the third clutch 9 is disposed on the countershaft 4, and the third clutch 9 is configured to be simultaneously engaged with the second clutch 8 to implement parking. Specifically, when the third clutch 9 and the second clutch 8 are simultaneously engaged, transmission paths of power input and output forms a closed loop, and the countershaft 4 is locked. Therefore, parking is implemented. After the first clutch 7 and the second clutch 8 are disposed on the countershaft 4, the first clutch 7 and the second clutch 8 occupy specific arrangement space, and simultaneous engagement of the third clutch 9 and the second clutch 8 may replace a parking function, so that a parking gear does not need to be disposed. That is, when the third clutch 9 and the second clutch 8 are simultaneously engaged, the parking function can be implemented. Because the parking gear does not need to be disposed, arrangement space of the transmission gearbox is reduced, and a structure of the transmission gearbox is more compact.

In a possible implementation, the first clutch 7 may include an inner ring and an outer ring that can rotate relative to the inner ring, and the third clutch 9 can be further engaged with the first clutch 7 to lock the outer ring of the first clutch 7, so that the inner ring and the outer ring have an equal rotation speed. When a road condition changes during first-gear driving, a rotation speed of the outer ring is sometimes greater than a rotation speed of the inner ring. For example, when a vehicle drives from a gentle road to a downhill road, the rotation speed of the outer ring is greater than the rotation speed of the inner ring. As a result, the first clutch 7 is disconnected, power of the motor cannot be output to the countershaft 4, and the power is lost Therefore, when the road condition changes, the third clutch 9 can be controlled to lock the outer ring of the first clutch 7; and after the inner ring and the outer ring have the same rotation speed, the power of the motor can be output to the countershaft 4, and the power will not be lost.

In a possible implementation, the two-speed transmission gearbox may further include an actuator 10 and a gearshift member 11. The actuator 10 may be specifically a driving component such as a motor, and is configured to drive the gearshift member 11, to enable the gearshift member 11 to toggle the third clutch 9 to a set position, so that the first-gear output tooth 5 is connected to the countershaft 4. That is, the third clutch 9 provides "safety" for first-gear transmission. When the first clutch 7 is engaged, the first-gear output tooth 5 is connected to the countershaft 4 to implement the first-gear transmission. In this case, the gearshift member 11 can toggle the third clutch 9; and once the first clutch 7 tends to change from engagement to disengagement, the third clutch 9 can be engaged, so that the first-gear output tooth 5 is connected to the countershaft 4. This ensures stability of the first-gear transmission.

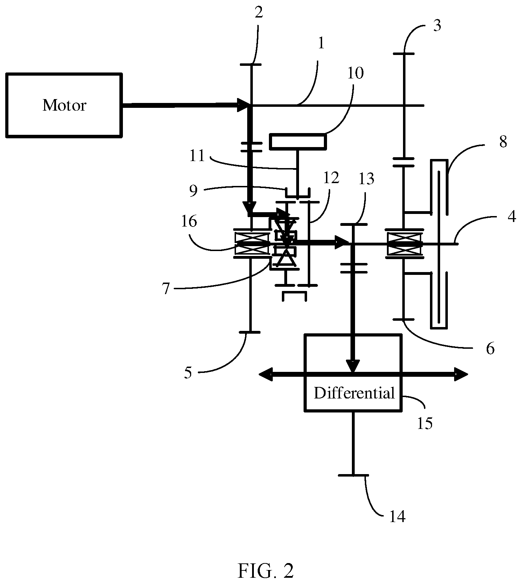

FIG. 2 is a schematic diagram of a two-speed transmission gearbox of an electric vehicle during first-gear driving according to an embodiment of this application. As shown in FIG. 2, a direction of an arrow indicates a direction of power transmission. It can be seen that the first-gear transmission means that the motor outputs power to the input shaft 1. After passing through the first-gear input tooth 2, the first-gear output tooth 5, the final reduction input tooth 13, and the final reduction output tooth 14, the power is transmitted to the differential 15 and then to a halfshaft.

When second-gear driving is required, the third clutch 9 reaches a second position to switch to the second-gear driving.

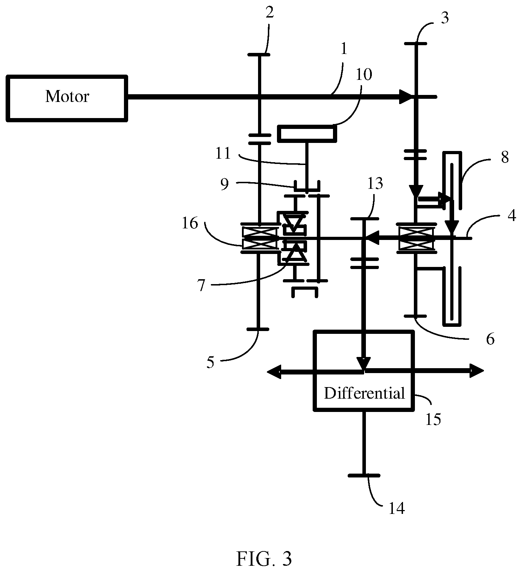

FIG. 3 is a schematic diagram of a two-speed transmission gearbox of an electric vehicle during second-gear driving according to an embodiment of this application. As shown in FIG. 3, a direction of an arrow indicates a direction of power transmission. It can be seen that the second-gear transmission means that the motor outputs power to the input shaft 1. After passing through the second-gear input tooth 3, the second-gear output tooth 6, the final reduction input tooth 13, and the final reduction output tooth 14, the power is transmitted to the differential 15 and then to the halfshaft.

The third clutch 9 is toggled by disposing the actuator 10 and the gearshift member 11, so that the two-speed transmission gearbox has advantages of a simple structure and smooth gear shifting.

The actuator 10 may be driven by a BLDC motor, and has a built-in or external reduction mechanism with a large velocity ratio. The reduction mechanism may be one or more sets of planetary gears, or a worm gear and worm reduction mechanism.

Further, the gearshift member 11 may be further configured to toggle the second clutch 8, so that the second clutch 8 is engaged or disengaged. Specifically, when the first-gear driving is required, the gearshift member 11 toggles the second clutch 8, so that the second clutch 8 is disengaged, the second-gear driving is disconnected, the first clutch 7 is engaged, the third clutch 9 reaches a first position, and the first-gear output tooth 5 is connected to the countershaft 4. Therefore, power shift is implemented. When the second-gear driving is required, the third clutch 9 reaches a second position, the first-gear output tooth 5 is disconnected from the countershaft 4, and the first clutch 7 is disconnected accordingly. At the same time, the gearshift member 11 toggles the second clutch 8 to engage the second clutch 8, and the second-gear output tooth 6 is connected to the countershaft 4. Therefore, the second-gear driving can be implemented. Because the gearshift member 11 can toggle the second clutch 8 while toggling the third clutch 9, only one component, that is, the gearshift member 11, can implement two functions additionally disposing other actuators. This further simplifies a structure of the transmission gearbox, and arrangement of the transmission gearbox is more compact.

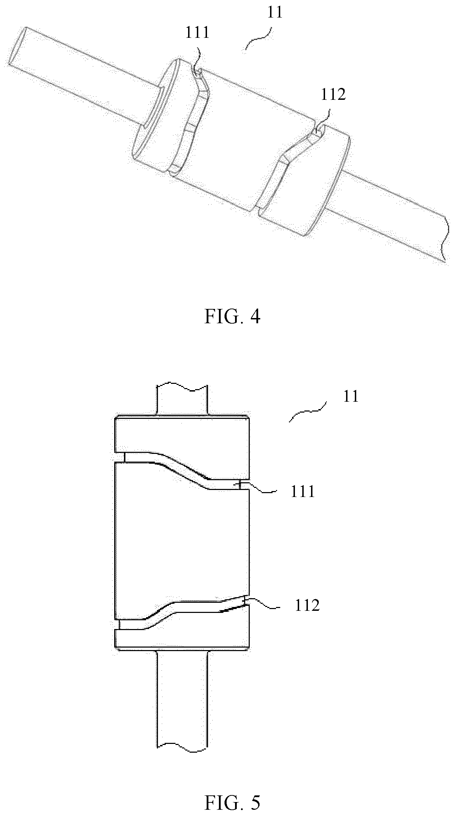

FIG. 4 is a detailed schematic diagram of a structure of a gearshift member, and FIG. 5 is a front view of the gearshift member in FIG. 4. As shown in FIG. 4 and FIG. 5, the gearshift member 11 may be specifically a gearshift drum, and the gearshift member 11 may specifically include a first sliding surface 111 and a second sliding surface 112. The first sliding surface 111 is configured to: when the gearshift member 11 rotates, toggle the third clutch 9 a set position, so that the first-gear output tooth 5 is connected to the countershaft 4, to implement power shift. The second sliding surface 112 is configured to: when the gearshift member 11 rotates, toggle the second clutch 8, so that the second clutch 8 is engaged or disengaged. The first sliding surface 111 and the second sliding surface 112 may be curved surfaces for smooth transition, so that the gearshift member 11 can more smoothly toggle the third clutch 9 and the second clutch 8.

In a specific implementation, the third clutch 9 may include a sliding sleeve, and the gearshift member 11 can toggle the sliding sleeve, so that the first-gear output tooth 5 is engaged or disengaged with the countershaft 4. Specifically, a body of the third clutch 9 may be connected to the countershaft 4 by using a spline or through welding, and the sliding sleeve may slide relative to the body. The sliding sleeve may be fastened on the first-gear output tooth 5, and the gearshift member 11 toggles the sliding sleeve of the third clutch 9, so that the first-gear output tooth 5 engages or disengages with the third clutch 9. Therefore, transmission and disconnection of first-gear transmission torque can be implemented.

Specifically, the third clutch 9 may be a dog clutch. An outer ring of the first clutch 7 may have a toothed structure, and the toothed structure is combined with an internal tooth of the dog clutch, to implement stable engagement of the third clutch 9 and the first clutch 7.

In a possible implementation, the two-speed transmission gearbox may further include a countershaft gear 12, the countershaft gear 12 is disposed on the countershaft 4, and the third clutch 9 is slidably connected to an outer ring of the countershaft gear 12. In another possible implementation, the third clutch 9 may be fastened to the countershaft 4 by using a spline.

In a possible implementation, an inner ring of the first clutch 7 is connected to the countershaft 4, and an outer ring of the first clutch 7 is connected to an inner ring of the first-gear output tooth 5 through welding or by using a spline.

To further improve arrangement space of the two-speed transmission gearbox, the second clutch 8 may use a dry multi-plate clutch.

If a dry clutch is in contact with water or oil, frictional characteristics of the dry clutch change. This results in a significant decrease in transmission torque and possible friction plate ablation. Moreover, debris generated after a dry friction plate wears can contaminate transmission oil in the transmission gearbox. Therefore, the foregoing two-speed transmission gearbox may further include a housing, and the housing covers an outer side of the second clutch 8, to isolate the dry clutch from a body of a gearbox.

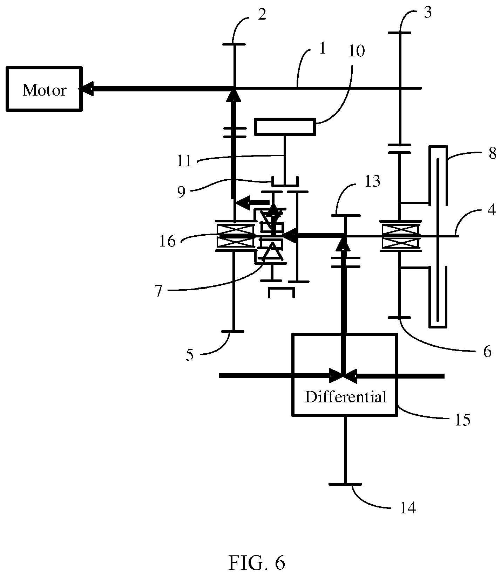

FIG. 6 is a schematic diagram of braking energy recovery of a two-speed transmission gearbox of an electric vehicle during first-gear driving according to an embodiment of this application. As shown in FIG. 6, in this state, the two-speed transmission gearbox provided in this embodiment of this application is in a first-gear position, the first clutch 7 is in an engaged state, the third clutch 9 is in an engaged state, and the second clutch 8 is in a disengaged state. Power from a wheel end is transmitted to the differential 15 through the halfshaft, and then reaches the motor through the final reduction output tooth 14 and the final reduction input tooth 13, the first clutch 7, the first-gear output tooth 5, and the first-gear input tooth 2 to implement a function of first-gear braking force feedback.

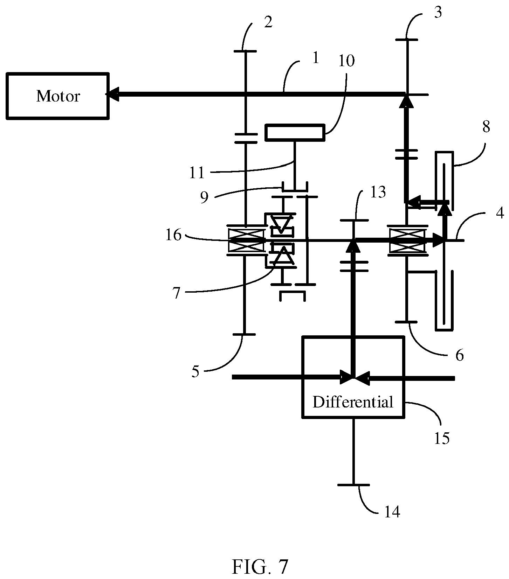

FIG. 7 is a schematic diagram of braking energy recovery of a two-speed transmission gearbox of an electric vehicle during second-gear driving according to an embodiment of this application. As shown in FIG. 7, in this state, the two-speed transmission gearbox provided in this embodiment of this application is in a second-gear position, the first clutch 7 is in a disengaged state (a freely rotatable state), the third clutch 9 is in a disengaged state, and the second clutch 8 is in an engaged state. Power from a wheel end is transmitted to the differential 15 through the halfshaft, and then reaches the motor through the final reduction output tooth 14 and the final reduction input tooth 13, the second clutch 8, the second-gear output tooth 6, and the second-gear input tooth 3 to implement a function of second-gear braking force feedback.

An embodiment of this application further provides an electric vehicle. The electric vehicle includes the two-speed transmission gearbox provided in any embodiment of this application. The electric vehicle has a characteristic of high system efficiency. Compared with an electric vehicle in the conventional technology, efficiency of an electric vehicle powertrain system can be improved by 2.5%, and a remaining driving range can be improved by 3 to 5%. Battery usage can be reduced with a same total driving range. Therefore, costs of the electric vehicle are reduced.

The foregoing descriptions are merely preferred embodiments of this application, but are not intended to limit this application. For a person skilled in the art, various modifications and variations may be made in this application. Any modification, equivalent replacement, or improvement made without departing from the spirit and principle of this application shall fall within the protection scope of this application.

## Claims

1. A two-speed transmission gearbox for an electric vehicle, comprising:
an input shaft configured to be connected to a motor, wherein a first-gear input tooth and a second-gear input tooth are disposed on the input shaft;
a countershaft, wherein a first-gear output tooth and a second-gear output tooth are disposed on the countershaft, the first-gear output tooth can be in constant mesh with the first-gear input tooth, and the second-gear output tooth can be in constant mesh with the second-gear input tooth;
a first clutch, disposed on the countershaft and configured to connect the first-gear output tooth to the countershaft; and
a second clutch, disposed on the countershaft and configured to connect the second-gear output tooth to the countershaft.

2. The two-speed transmission gearbox according to claim 1, wherein the two-speed transmission gearbox further comprises:
a third clutch, disposed on the countershaft and configured to be simultaneously engaged with the second clutch to implement parking.

3. The two-speed transmission gearbox according to claim 2, wherein the first clutch comprises an inner ring and an outer ring that can rotate relative to the inner ring; and
the third clutch can be engaged with the first clutch to lock the outer ring.

4. The two-speed transmission gearbox according to claim 2 or 3, wherein the two-speed transmission gearbox further comprises an actuator and a gearshift member; and the actuator is configured to drive the gearshift member, to enable the gearshift member to toggle the third clutch to a set position, so that the first-gear output tooth is connected to the countershaft.

5. The two-speed transmission gearbox according to claim 4, wherein the gearshift member is further configured to toggle the second clutch, so that the second clutch is engaged or disengaged.

6. The two-speed transmission gearbox according to claim 5, wherein the gearshift member comprises a first sliding surface and a second sliding surface;
the first sliding surface is used to: when the gearshift member rotates, toggle the third clutch to the set position, so that the first-gear output tooth is connected to the countershaft; and
the second sliding surface is used to: when the gearshift member rotates, toggle the second clutch, so that the second clutch is engaged or disengaged.

7. The two-speed transmission gearbox according to any one of claims 4 to 6, wherein the third clutch comprises a sliding sleeve, and the gearshift member can toggle the sliding sleeve, so that the first-gear output tooth is engaged or disengaged with the countershaft.

8. The two-speed transmission gearbox according to claim 2, wherein the third clutch is a dog clutch.

9. The two-speed transmission gearbox according to claim 2, wherein the two-speed transmission gearbox further comprises a countershaft gear, and the countershaft gear is disposed on the countershaft; and
the third clutch is slidably connected to an outer ring of the countershaft gear.

10. The two-speed transmission gearbox according to claim 2, wherein an outer ring of the first clutch is connected to an inner ring of the first-gear output tooth through welding or by using a spline.

11. The two-speed transmission gearbox according to any one of claims 1 to 10, wherein the second clutch is a dry multi-plate clutch.

12. The two-speed transmission gearbox according to claim 11, wherein the two-speed transmission gearbox comprises a housing, and the housing covers an outer side of the second clutch.

13. An electric vehicle comprising the two-speed transmission gearbox according to any one of claims 1 to 12.
